(19) **Europäisches Patentamt / European Patent Office / Office européen des brevets**

(11) **EP 2 666 992 A1**

(12) **EUROPEAN PATENT APPLICATION**
published in accordance with Art. 153(4) EPC

(43) Date of publication:
**27.11.2013 Bulletin 2013/48**

(21) Application number: **11856186.9**

(22) Date of filing: **20.01.2011**

(51) Int Cl.:
**F02D 13/02** (2006.01)   **F02D 41/02** (2006.01)
**F02D 43/00** (2006.01)

(86) International application number:
**PCT/JP2011/051020**

(87) International publication number:
**WO 2012/098670 (26.07.2012 Gazette 2012/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **TOYOTA JIDOSHA KABUSHIKI KAISHA**
**Toyota-shi, Aichi-ken, 471-8571 (JP)**

(72) Inventors:
• **ITO, Katsuhiro**
  **Toyota-shi**
  **Aichi-ken 471-8571 (JP)**
• **OGAWA, Takashi**
  **Toyota-shi**
  **Aichi-ken 471-8571 (JP)**
• **KOGO, Tomoyuki**
  **Toyota-shi**
  **Aichi-ken 471-8571 (JP)**
• **IWATA, Kazuyasu**
  **Toyota-shi**
  **Aichi-ken 471-8571 (JP)**
• **YANASE, Yoshinori**
  **Toyota-shi**
  **Aichi-ken 471-8571 (JP)**

(74) Representative: **Intès, Didier Gérard André et al**
**Cabinet Beau de Loménie**
**158, rue de l'Université**
**75340 Paris Cedex 07 (FR)**

(54) **CONTROL DEVICE FOR COMPRESSION IGNITION TYPE INTERNAL COMBUSTION ENGINE AND METHOD FOR DETERMINING SMOKE-GENERATING STATE OF COMPRESSION IGNITION TYPE INTERNAL COMBUSTION ENGINE**

(57)   The engine system 1 has an engine ECU 10 including: an equivalent ratio calculation means that calculates an average value of equivalent ratio for one cycle in a combustion chamber of the engine 100, a maximum combustion temperature calculation means that calculates a maximum value of combustion temperature in the combustion chamber for the same cycle as for calculation of the average value of equivalent ratio by the equivalent ratio calculation means; and a determination means that determines a smoke-generating state of the engine 100 based on a calculation result by the equivalent ratio calculation means and a calculation result by the maximum combustion temperature calculation means. The engine ECU 10 determines that the smoke-generating state is in a first region when the average value of equivalent ratio is less than a given first threshold value and the maximum value of combustion temperature in the combustion chamber is less than a given second threshold value, and commands an electric VVT mechanism 26 to retard a closing timing of an intake valve 22. When the smoke-generating state is determined to be in a region other than the first region, the electric VVT mechanism 26 is commanded to advance the closing timing of the intake valve 22.

FIG. 11

**Description**

[TECHNICAL FIELD]

The present invention relates to a control device for a compression ignition type internal combustion engine and a method for determining a smoke-generating state of a compression ignition type internal combustion engine.

[BACKGROUND ART]

Superchargers (turbochargers), which supercharge intake air with the energy of exhaust gas, are widely used in compression ignition type internal combustion engines such as diesel engines to increase the output thereof. Further, exhaust gas recirculation (EGR) systems, which recirculate a part of the exhaust gasses to an intake side, are widely used in the compression ignition type internal combustion engines to reduce the amount of nitrogen oxides (NOx) emitted during combustion.

These compression ignition type internal combustion engines have a response lag of the turbocharger (turbo lag) and a delay of the exhaust gas recirculation when the output thereof changes because of, for example, the acceleration of the vehicle. The turbo lag and the delay of the exhaust gas recirculation increase exhaust emissions, especially the amount of smoke emission because the actual operating state of the compression ignition type internal combustion engine greatly differs from a target operating state.

Patent Document 1 discloses a technique for reducing the occurrence of the turbo lag in the compression ignition type internal combustion engine. The internal combustion engine disclosed in Patent Document 1 includes an EGR means that partially recirculates emissions from cylinders to an intake side. The EGR means is controlled so that emissions are partly recirculated in a part of the cylinders and emissions are not recirculated in the other part of the cylinders when a load on the internal combustion engine is higher than a threshold value. The above control suppresses the occurrence of the turbo lag when the load on the internal combustion engine becomes high.

Patent Document 2 discloses a technique that may relate to the present invention.

[PRIOR ART DOCUMENT]

[PATENT DOCUMENT]

   [Patent Document 1] Japanese Patent Application Publication No. 2009-174377
   [Patent Document 2] Japanese Patent Application Publication No. 08-296469

[SUMMARY OF THE INVENTION]

[PROBLEMS TO BE SOLVED BY THE INVENTION]

In recent years, it has been attempted to change the opening and closing timing of an intake valve and an exhaust valve in accordance with an operating state by providing a variable valve timing mechanism in the compression ignition type internal combustion engine. The valve timing control with the variable valve timing mechanism can reduce a combustion temperature of the compression ignition type internal combustion engine and reduce the amount of smoke emission by retarding, for example, a closing timing of the intake valve to decrease an actual compression ratio. As described above, the change of the closing timing of the intake valve can suppress an increase in the amount of smoke emission caused by a deviation of the actual operating state from the target operating state of the compression ignition type internal combustion engine.

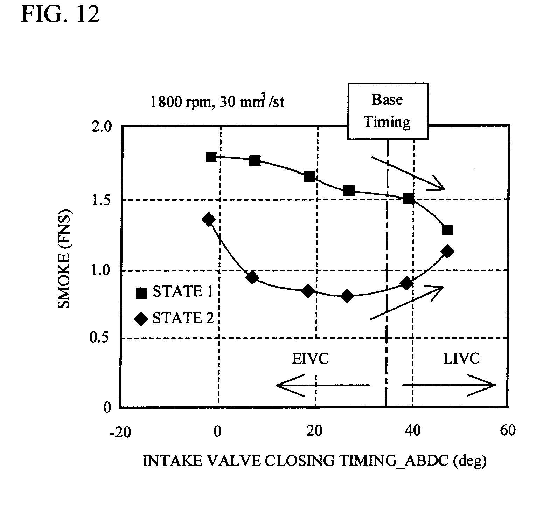

However, the contributing factors to smoke generation in the compression ignition type internal combustion engine are very complicated, and thus, the amount of smoke emission may fail to be reduced by retarding the closing timing of the intake valve even at the same rotational speed and load for example depending on the smoke-generating state (see FIG. 12). On the other hand, depending on the smoke-generating state, the amount of smoke emission may be reduced by advancing the closing timing of the intake valve and improving a volume efficiency, i.e. reducing an equivalent ratio (theoretical air-fuel ratio/actual air-fuel ratio) of the compression ignition type internal combustion engine. Therefore, the smoke-generating state is required to be determined more accurately and the control for changing the closing timing of the intake valve is required to be executed in accordance with the determined smoke-generating state to properly reduce the amount of smoke emission of the compression ignition type internal combustion engine.

The smoke-generating state of the compression ignition type internal combustion engine is generally described by a local combustion temperature and an equivalent ratio, but the local combustion temperature is very difficult to obtain. Thus, it has been conventionally attempted to estimate the smoke-generating state with an in-cylinder temperature at a compression end of a piston (compression end temperature) (see Patent Document 2 for example), but the smoke-generating state is difficult to accurately determine with an estimating method with the compression end temperature.

The present invention has been made under the above circumstances, and has an object to provide a control device for a compression ignition type internal combustion engine and a method for determining a smoke-generating state  of a compression ignition type internal combustion engine that are capable of determining a smoke-generating state more accurately and reducing an amount of smoke emission.

[MEANS FOR SOLVING THE PROBLEMS]

To achieve the above described object, a control device for a compression ignition type internal combustion engine of the present invention is characterized by including: an equivalent ratio calculation means configured to calculate an average value of equivalent ratio for one cycle in a combustion chamber of the compression ignition type internal combustion engine; a maximum combustion temperature calculation means configured to calculate a maximum value of combustion temperature in the combustion chamber for the same cycle as for calculation of the average value of equivalent ratio by the equivalent ratio calculation means; a determination means configured to determine a smoke-generating state of the compression ignition type internal combustion engine based on a calculation result by the equivalent ratio calculation means and a calculation result by the maximum combustion temperature calculation means; and a variable valve timing means configured to change a closing timing of an intake valve of the compression ignition type internal combustion engine to a desired timing, wherein the variable valve timing means changes the closing timing of the intake valve based on a determination result by the determination means.

The above described configuration enables to determine the smoke-generating state of the compression ignition type internal combustion engine more accurately from the average value of equivalent ratio and the maximum value of combustion temperature for one cycle in the combustion chamber. Thus, the proper control of the closing timing of the intake valve can be executed based on the determination result of the smoke-generating state to reduce the amount of smoke emission of the compression ignition type internal combustion engine. Therefore, the smoke-generating state can be determined more accurately, and the amount of smoke emission can be reduced.

Especially, the control device for the compression ignition type internal combustion engine of the present invention may have a configuration that the compression ignition type internal combustion engine includes an exhaust gas recirculation passage that connects an exhaust side to an intake side and recirculate a part of exhaust gas to the intake side, and the maximum combustion temperature calculation means extracts at least an exhaust gas recirculation ratio of the exhaust gas recirculation passage as a parameter and calculates the maximum value of combustion temperature in the combustion chamber for one cycle based on the parameter.

The above configuration enables to properly calculate the maximum  value of combustion temperature in the combustion chamber from parameters including at least the exhaust gas recirculation ratio of the exhaust gas recirculation passage. Thus, the smoke-generating state can be determined more accurately based on the calculated maximum value of combustion temperature. Therefore, the smoke-generating state can be determined more accurately, and the amount of smoke emission can be reduced.

In addition, the control device for the compression ignition type internal combustion engine of the present invention may have a configuration that the maximum combustion temperature calculation means further extracts at least one of an injection center, which is calculated from a fuel injection quantity and an injection timing of the compression ignition type internal combustion engine, a compression end temperature in the combustion chamber, a rotational speed of the compression ignition type internal combustion engine, an oxygen concentration in the combustion chamber, and a compression end pressure in the combustion chamber as a parameter, and calculates the maximum value of combustion temperature for one cycle in the combustion chamber based on the parameter.

The above configuration enables to calculate the maximum value of combustion temperature in the combustion chamber more properly from parameters including at least one of the fuel injection center, the compression end temperature in the combustion chamber, the engine rotational speed, the oxygen concentration in the combustion chamber, and the compression end pressure in the combustion chamber. Thus, the smoke-generating state can be determined more accurately based on the calculated maximum value of combustion temperature. Therefore, the smoke-generating state can be determined more accurately and the amount of smoke emission can be reduced.

In addition, the control device for the compression ignition type internal combustion engine of the present invention may have a configuration that the determination means determines that the smoke-generating state of the compression ignition type internal combustion engine is in a first region when the calculation result by the equivalent ratio calculation means is less than a first threshold value and the calculation result by the maximum combustion temperature calculation means is less than a second threshold value, and the variable valve timing means shifts the closing timing of the intake valve toward a retardation side when the determination means determines that the smoke-generating state of the compression ignition type internal combustion engine is in the first region.

The above configuration enables to reduce the combustion temperature by shifting the closing timing of the intake valve toward the retardation side when the smoke-generating state of the compression ignition type internal combustion engine is in a region where it is proportional to the maximum combustion temperature (first region). Therefore, the amount of smoke emission of the compression ignition type internal combustion engine can be reduced properly.

Furthermore, the control device for the compression ignition type internal combustion engine of the present invention may have a configuration that the determination means determines that the smoke-generating state of the compression ignition type internal combustion engine is in a region other than a first region when the calculation result by the equivalent ratio calculation means is greater than or equal to a first threshold value and the calculation result by the maximum combustion temperature calculation means is greater than or equal to a second threshold value, and the variable valve timing means shifts the closing timing of the intake valve toward an advancement side when the determination means determines that the smoke-generating state of the compression ignition type internal combustion engine is in the region other than the first region.

The above configuration enables to increase the combustion temperature and reduce the equivalent ratio by shifting the closing timing of the intake valve toward the advancement side when the smoke-generating state of the compression ignition type internal combustion engine is in a region where it is inversely proportional to the maximum combustion temperature or in a region where it depends on the equivalent ratio (region other than the first region). Thus, the amount of smoke emission of the compression ignition type internal combustion engine can be reduced properly.

In addition, the control device for the compression ignition type internal combustion engine of the present invention may have a configuration that the variable valve timing means further shifts the closing timing of the intake valve toward the retardation side as a rotational speed of the compression ignition type internal combustion engine increases.

The above configuration enables to reduce an actual compression ratio properly in accordance with the rotational speed of the compression ignition type internal combustion engine to reduce the combustion temperature. Thus, the amount of smoke emission of the compression ignition type internal combustion engine can be reduced properly.

Furthermore, the control device for the compression ignition type internal combustion engine of the present invention may have a configuration that the variable valve timing means further shifts the closing timing of the intake valve toward the advancement side as a rotational speed of the compression ignition type internal combustion engine decreases.

The above configuration enables to improve a volume efficiency in accordance with the rotational speed of the compression ignition type internal combustion engine to increase the combustion temperature and reduce the equivalent ratio. Thus, the amount of smoke emission of the compression ignition type internal combustion engine can be reduced properly.

Furthermore, the present invention is a method for determining a smoke-generating state of a compression ignition type internal combustion engine including: an equivalent ratio calculation step for calculating an average value of equivalent ratio for one cycle in a combustion chamber of the compression ignition type internal combustion engine; a maximum combustion temperature calculation step for calculating a maximum value of combustion temperature in the combustion chamber for the same cycle as for calculation of the average value of equivalent ratio at the equivalent ratio calculation step; and a determination step for determining a smoke-generating state of the compression ignition type internal combustion engine based on a calculation result at the equivalent ratio calculation step and a calculation step at the maximum combustion temperature calculation step.

The above method enables to determine the smoke-generating state of the compression ignition type internal combustion engine more accurately from the average value of equivalent ratio and the maximum value of combustion temperature for one cycle in the combustion chamber. Thus, a proper control for reducing the amount of smoke emission of the compression ignition type internal combustion engine can be executed in accordance with the determination result of the smoke-generating state.

[EFFECTS OF THE INVENTION]

The present invention enables to determine a smoke-generating state of a compression ignition type internal combustion engine more accurately and reduce an amount of smoke emission.

[BRIEF DESCRIPTION OF THE DRAWINGS]

FIG. 1 is a diagram illustrating a configuration of an engine system of an embodiment;
FIG. 2 is a cross-sectional view illustrating a structure of a cylinder of the engine of the embodiment;

FIG. 3 illustrates a relationship between a maximum combustion temperature and an equivalent ratio of the engine and a smoke-generating state;

FIG. 4A illustrates a relationship between an equivalent ratio of the engine and a smoke generation amount, and FIG. 4B illustrates a relationship between a maximum combustion temperature and a smoke generation amount when an equivalent ratio of the engine is less than 0.8;

FIG. 5A illustrates a relationship between a compression end temperature and an equivalent ratio of the engine and a smoke-generating state, and FIG. 5B illustrates a relationship between an average maximum in-cylinder temperature and an equivalent ratio of the engine and a smoke-generating state;

FIG. 6 illustrates a method for calculating an EGR ratio of the engine;

FIG. 7 is a conceptual diagram of an injection center;

FIG. 8A illustrates a method for calculating an injection center, FIG. 8B illustrates a method for calculating a compression end temperature, FIG. 8C illustrates a method for calculating an oxygen concentration, and FIG. 8D illustrates a method for calculating a compression end pressure;

FIG. 9A illustrates a base timing of a closing timing of an intake valve, FIG. 9B illustrates a control for retarding the closing timing of the intake valve, and FIG. 9C illustrates a control for advancing the closing timing of the intake valve;

FIG. 10A illustrates a relationship between a closing timing of the intake valve and an actual compression ratio, and FIG. 10B illustrates a relationship between a closing timing of the intake valve and a burned zone gas temperature;

FIG. 11 is a flowchart illustrating a process by an engine ECU; and

FIG. 12 illustrates a relationship between a closing timing of the intake valve and an amount of smoke emission in a conventional compression ignition type internal combustion engine.

[MODES FOR CARRYING OUT THE INVENTION]

Hereinafter, a detail description will be given of modes for carrying out the present invention with reference to the drawings.

[Embodiment]

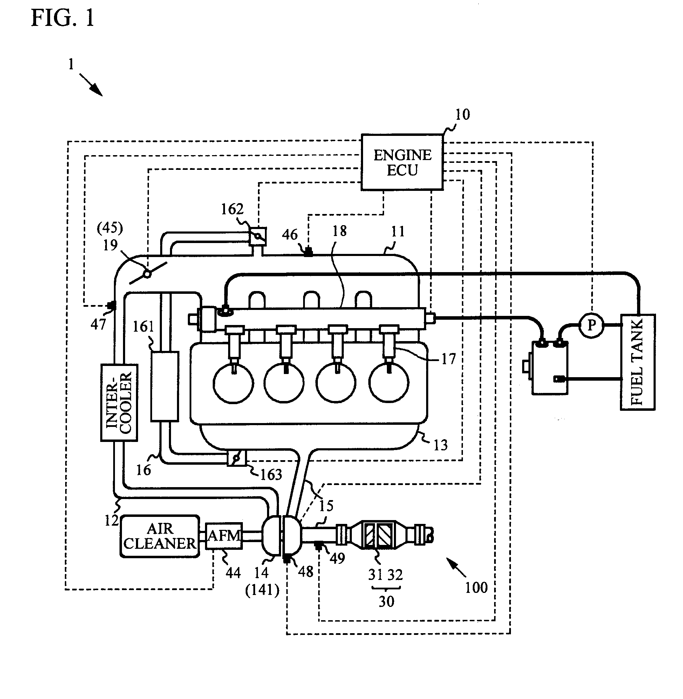

A description will be given of an embodiment of the present invention with reference to the drawings. FIG. 1 is a diagram illustrating a configuration of an engine system 1 including a control device for a compression ignition type internal combustion engine of the present invention. FIG. 1 illustrates only a part of components of the engine.

The engine system 1 illustrated in FIG. 1 includes an engine 100 as a power source, and an engine ECU (Electronic Control Unit) 10 that overall controls operation of the engine 100. The engine 100 has a turbocharger 14 and an exhaust cleaning device 30 downstream of an exhaust manifold 13, and includes an electric VVT mechanism 26 and a hydraulic VVT mechanism 27 that change valve timing of an intake valve 22 and an exhaust valve 23. In addition, the engine 100 includes an EGR passage 16 that recirculates a part of exhaust gas to an intake side. Further, the engine 100 includes various sensors such as a crank angle sensor 41, an air flow meter 44, an intake cam angle sensor 42, an intake pressure sensor 46, and an intake temperature sensor 47.

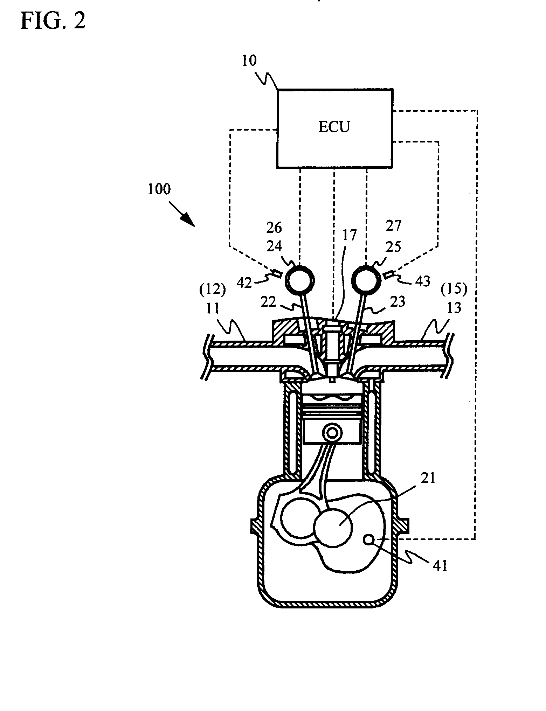

FIG. 2 is a cross-sectional view illustrating a structure of a cylinder of the engine 100 of the embodiment. The engine 100 is a four-cylinder diesel engine mounted in a vehicle, and each cylinder includes a piston that forms a combustion chamber. The piston in each combustion chamber is slidably fit into the cylinder of the engine 100, and is connected to a crankshaft 21 that is an output shaft member by a connecting rod.

The engine ECU 10 determines an injection amount and an injection timing of fuel based on information such as an intake-air quantity from the air flow meter 44 and a position of the piston from the crank angle sensor 41, and sends a signal to an injector 17. The injector 17 injects fuel of a command fuel injection quantity into the combustion chamber at a command injection timing according to the signal from the engine ECU 10. The fuel injected from the injector 17 is atomized in the combustion chamber, and forms an air-fuel mixture with an intake air flowing into the combustion chamber by opening the intake valve. The air-fuel mixture is compressed and ignited to combust in the combustion chamber by the upward motion of the piston, and expands in the combustion chamber and causes the piston to move downward. The downward motion is converted into an axial rotation of the crankshaft 21 through the connecting rod to give the engine 100 a power. Here, the engine 100 is not limited to a four-cylinder diesel engine, and may be a multi-cylinder diesel engine. The engine 100 is an example of a compression ignition type internal combustion engine of the present invention.

The crank angle sensor 41 is located near the shaft of the crankshaft 21. The crank angle sensor 41 detects a rotational angle of the crankshaft 21, and sends detection results to the engine ECU 10. This allows the engine ECU 10 to acquire information about a crank angle such as a rotational speed and an angular velocity of the crankshaft 21 during the operation. The engine ECU 10 recognizes the output of the engine 100 by calculating an engine rotational speed and an engine torque based on the acquired rotational speed and angular velocity of the crankshaft 21.

Each combustion chamber includes intake valves and exhaust valves. FIG. 2 illustrates one of the intake valves and one of the exhaust valves. Each intake port in the combustion chamber includes the intake valve 22 and an intake camshaft 24 for opening and closing the intake valve 22. Further, each exhaust port in the combustion chamber includes the exhaust valve 23 and an exhaust camshaft 25 for opening and closing the exhaust valve 23.

The intake valve 22 and the exhaust valve 23 are opened and closed by the rotation of the intake camshaft 24 and the exhaust camshaft 25 to which the rotation of the crankshaft 21 is transmitted by a link mechanism (e.g. timing belt, timing chain) to connect or disconnect the intake port and the exhaust port to the combustion chamber. Phases of the intake valve 22 and the exhaust valve 23 are represented using a crank angle as a reference.

The intake camshaft 24 has the electric VVT mechanism 26 that is a variable valve timing mechanism (hereinafter, referred to as VVT mechanism). The electric VVT mechanism 26 rotates the intake camshaft 24 with an electric motor based on a command from the engine ECU 10. This changes a rotational phase of the intake camshaft 24 with respect to the crankshaft 21, and thus changes a valve timing of the intake valve 22. In this case, the rotational phase of the intake camshaft 24 is detected by the intake cam angle sensor 42, and is transmitted to the engine ECU 10. This allows the engine ECU 10 to acquire a phase of the intake camshaft 24 and a phase of the intake valve 22. The phase of the intake camshaft 24 is represented using the crank angle as a reference.
The electric VVT mechanism 26 is an example of a variable valve timing means of the present invention.

The exhaust camshaft 25 has the hydraulic VVT mechanism 27. The hydraulic VVT mechanism 27 rotates the exhaust camshaft 25 with an oil control valve (hereinafter, described as OCV) based on a command from the engine ECU 10. This changes a rotational phase of the exhaust camshaft 25 with respect to the crankshaft 21, and thus changes a valve timing of the exhaust valve 23. In this case, the rotational phase of the exhaust camshaft 25 is detected by an exhaust cam angle sensor 43, and is transmitted to the engine ECU 10. This allows the engine ECU 10 to acquire a phase of the exhaust camshaft 25 and a phase of the exhaust valve 23. The phase of the exhaust camshaft 25 is represented using the crank angle as a reference.

Back to FIG. 1, the engine 100 includes a common rail type fuel injection system including the injector 17, a common rail 18, a low pressure fuel pump, a high pressure fuel pump and the like. Fuel sucked from a fuel tank by the low pressure fuel pump is discharged into the common rail 18 at high pressure by the high pressure fuel pump, and accumulated.

The common rail 18 is a container that accumulates high-pressure fuel to be supplied to the injector 17. The fuel pumped from the high pressure fuel pump is accumulated in the common rail 18 so as to have a necessary pressure, and is supplied to the injector 17 in each combustion chamber through a high-pressure pipe. The common rail 18 has a rail pressure sensor and a pressure reducing valve. The engine ECU 10 directs the opening of the pressure reducing valve when a fuel pressure in the common rail 18 output from the rail pressure sensor exceeds a prescribed value. A common rail pressure is controlled to be constantly less than or equal to the prescribed value by discharging the fuel from the pressure reducing valve. The fuel discharged from the pressure reducing valve passes through a relief pipe and returns to the fuel tank.

The injector 17 is mounted in each combustion chamber. The fuel supplied from the common rail 18 through the high-pressure pipe is injected and supplied to the combustion chamber within the engine cylinder by the injector 17 based on the command from the engine ECU 10. The engine ECU 10 determines a fuel injection quantity and an injection timing based on information about an intake air quantity from the air flow meter 44 and a position of the piston from the crank angle sensor 41, and sends a signal to the injector 17. The injector 17 injects the fuel of a command fuel injection quantity at high pressure into the combustion chamber at a command injection timing according to the signal from the engine ECU 10. Leak fuel of the injector 17 returns to the fuel tank through the relief pipe. Here, the injector 17 can be located in an arbitrary position in the combustion chamber in accordance with a specification of the engine 100.

An intake manifold 11 communicating with the combustion chambers is connected to each of the combustion chambers of the engine 100. The intake manifold 11 is coupled to an air cleaner through the air flow meter 44, a diesel throttle 19, an intercooler, and a compressor of the turbocharger 14 by an intake passage 12, and introduces an intake air taken in from the outside of the engine 100 into each of the combustion chambers.

The diesel throttle 19 includes a throttle position sensor 45. The air flow meter 44 and the throttle position sensor 45 detect a quantity of the intake air passing through the intake passage 12 and an opening degree of the diesel throttle 19 respectively, and transmit detection results to the engine ECU 10. The engine ECU 10 recognizes the quantity of the intake air introduced into the intake manifold 11 based on the transmitted detection results, and introduces the intake air necessary for the operation of the engine 100 into the combustion chambers by controlling an opening degree of the diesel throttle 19.
The diesel throttle 19 is preferably a throttle by wire type using a step motor, but may be other mechanisms that can arbitrarily change the opening degree of the diesel throttle 19.

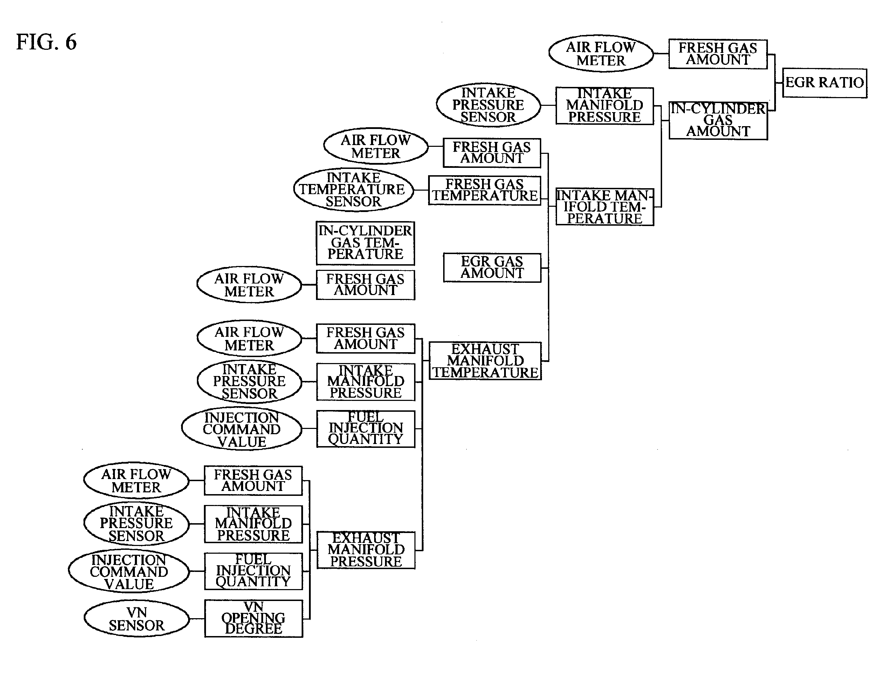

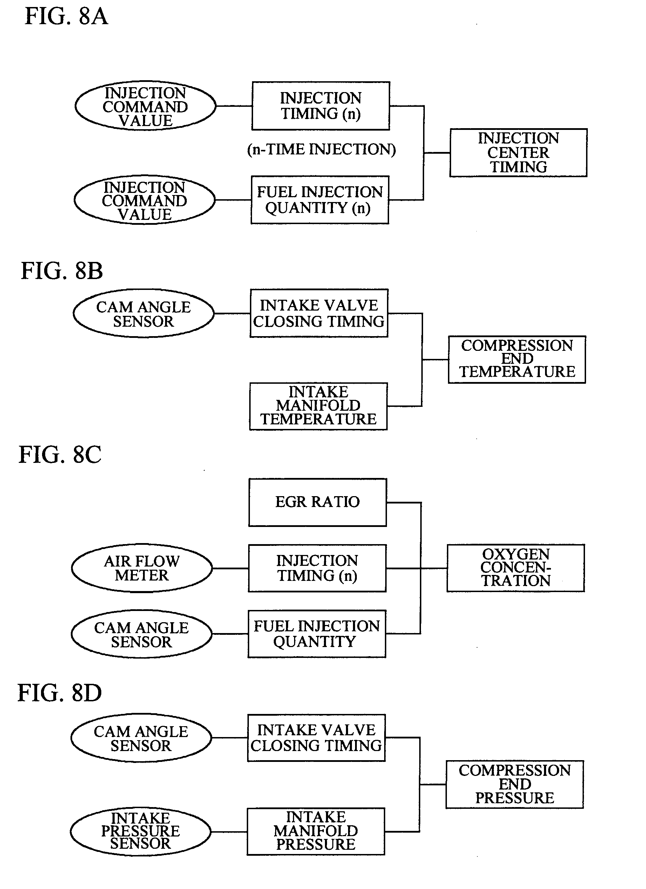

The intake manifold 11 includes the intake pressure sensor 46 that detects a pressure of the intake air in the intake manifold 11 and transmits a detection result to the engine ECU 10. The engine ECU 10 calculates a compression end pressure in the combustion chamber based on the detection results from the intake pressure sensor 46 and the intake cam angle sensor 42. The intake passage 12 includes the intake temperature sensor 47 that detects a temperature of the intake air in the intake passage 12 and transmits a detection result to the engine ECU 10. The engine ECU 10 calculates a temperature in the intake manifold 11 based on the detection results from the intake temperature sensor 47 and the intake pressure sensor 46, and calculates an exhaust gas recirculation (EGR) ratio and a compression end temperature with the calculated temperature in the intake manifold 11 (see FIG. 6 and FIG. 8B).

Further, the exhaust manifold 13 communicating with the combustion chambers is connected to each of the combustion chambers in the engine 100. The exhaust manifold 13 is coupled to the exhaust cleaning device 30 through an exhaust turbine of the turbocharger 14 by an exhaust passage 15, and discharges exhaust gas after combustion to the outside of the engine 100.

The turbocharger 14 rotates the exhaust turbine with a kinetic energy of the exhaust gas, compresses and sends the intake air passing through the air cleaner into the intercooler. The compressed intake air is cooled down in the intercooler before introduced into the intake manifold 11. The turbocharger 14 is a variable-nozzle type turbocharger (Variable Nozzle Turbo, hereinafter, abbreviated as VNT), and includes a variable nozzle vane mechanism 141 at an exhaust turbine side. An inflow angle of the exhaust gas to a turbine impeller blade is controlled by controlling an opening degree of the variable nozzle vane mechanism 141 to adjust a supercharging pressure of the intake air introduced into the intake manifold 11. For example, when the opening degree of the variable nozzle vane mechanism 141 is decreased, a supercharging efficiency improves because exhaust gas flowing in the turbine impeller blades increases and the rate of utilization of the energy of the exhaust gas increases. In addition, when the opening degree of the variable nozzle vane mechanism 141 is increased, the supercharging efficiency decreases because the amount of the exhaust gas flowing in the turbine impeller blades decreases and the rate of utilization of the energy of the exhaust gas decreases. Here, the turbocharger 14 is not limited to a VNT, and may adjust a supercharging pressure (control the rate of utilization of the energy of the exhaust gas) with a wastegate.

The turbocharger 14 is an example of a supercharger of the present invention.

The turbocharger 14 includes a VN sensor 48 that detects an opening degree of the variable nozzle vane mechanism 141 and transmits a detection result to the engine ECU 10. The engine ECU 10 calculates a gas amount in the combustion chamber based on the detection result by the VN sensor 48, and calculates an EGR ratio with the calculated gas amount in the combustion chamber (see FIG. 6).

The exhaust cleaning device 30 cleans the exhaust gas from the engine 100, and includes a cleaning catalyst 31 that removes NOx, HC, and CO in the exhaust gas, and a DPF 32 that captures a particle matter (PM) such as smoke.

The cleaning catalyst 31 is located upstream of the DPF 32, and is a ternary catalyst that can remove HC, CO, and NOx in the exhaust gas from the engine 100. The cleaning catalyst 31 has a widely known structure formed by coating a catalyst carrier with a porous honeycomb structure with a noble metal supported on a composite oxide and passing the exhaust gas through thereinside. The cleaning catalyst 31 of the present embodiment is a NOx storage-reduction type  catalyst that stores NOx included in the exhaust gas when the air-fuel ratio is lean, and reduces NOx with reduction components (HC, CO) included in the exhaust gas when the air-fuel ratio is stoichiometric or rich, but is not limited to this. A number of the cleaning catalysts 31 may be combined depending on the displacement of the engine 100, a used region, and the like.

The DPF 32 is located downstream of the cleaning catalyst 31, and is a widely known wall-flow type filter made of porous cordierite ceramics. Other ceramics such as silicon carbide (SiC) may be used for the DPF 32 instead of cordierite ceramics. In this case, the exhaust cleaning device 30 may be configured to have the DPF 32 at an upstream side and the cleaning catalyst 31 at a downstream side. The exhaust cleaning device 30 may be a DPNR (Diesel Particulate NOx Reduction system) formed by combining a NOx storage-reduction catalyst with a particulate filter.

The exhaust cleaning device 30 includes an unillustrated temperature sensor and pressure sensor that detect a floor temperature and an inlet pressure of the exhaust cleaning device 30 and send detection results to the engine ECU 10. The engine ECU 10 recognizes actual temperatures of the cleaning catalyst 31 and the DPF 32 and a clogging degree of the DPF 32 based on the transmitted detection results, and executes a regeneration process of the cleaning catalyst 31 and the DPF 32 based on the recognition result. The above process allows the exhaust cleaning device 30 to constantly maintain an exhaust gas cleaning ability more than a prescribed level.

An A/F sensor 49 is located upstream of the exhaust cleaning device 30, detects an air-fuel ratio in the engine 100 from an oxygen concentration and an unburned gas concentration in the exhaust gas, and transmits the result to the engine ECU 10. This allows the engine ECU 10 to acquire air-fuel ratio information of the engine 100 under various load conditions. The A/F sensor 49 is a sensor formed by coating a zirconia surface with platinum and providing a diffusion rate limiting layer in an outer periphery of an outside electrode, but is not limited to this. The A/F sensor 49 generates an oxygen ion current in accordance with an oxygen concentration in the exhaust gas at a lean side (A/F > 14.6) and an oxygen ion current in accordance with an unburned gas concentration at a rich side (A/F < 14.6) when a voltage is applied to an element. In this case, the output current of the A/F sensor 49 has a positive correlation to the air-fuel ratio, and accordingly, allows the air-fuel ratio to be detected in a wide range.

The exhaust manifold 13 is connected to the intake manifold 11 by the EGR passage 16. The exhaust gas flowing into the EGR passage 16 is cooled down in an EGR cooler 161, goes into the intake manifold 11, with the flow rate adjusted by an EGR valve 162, and introduced into the combustion chamber together with the intake air. The EGR valve 162 regulates a recirculated amount of the exhaust gas into the intake manifold 11 by controlling the valve opening degree based on the command from the engine ECU 10. As described above, the combustion temperature of the engine 100 can be decreased to reduce the amount of NOx emission by recirculating the proper amount of the EGR gas corresponding to the operating state to the intake manifold 11.

The EGR passage 16 is an example of an exhaust gas recirculation passage of the present invention.

The engine ECU 10 is a computer including a CPU (Central Processing Unit) executing calculation, a ROM (Read Only Memory) storing programs, and a RAM (Random Access Memory) or an NVRAM (Non Volatile RAM) storing data. The engine ECU 10 reads in detection results by the sensors provided to the components in the engine 100 and overall controls the operation of the engine 100 based on the detection results.

The engine ECU 10 calculates a maximum value of combustion temperature and an average value of equivalent ratio for one cycle in the combustion chamber of the engine 100, and determines the smoke-generating state of the engine 100 based on the calculation results. Hereinafter, a description will be given of the determination of the smoke-generating state executed by the engine ECU 10.

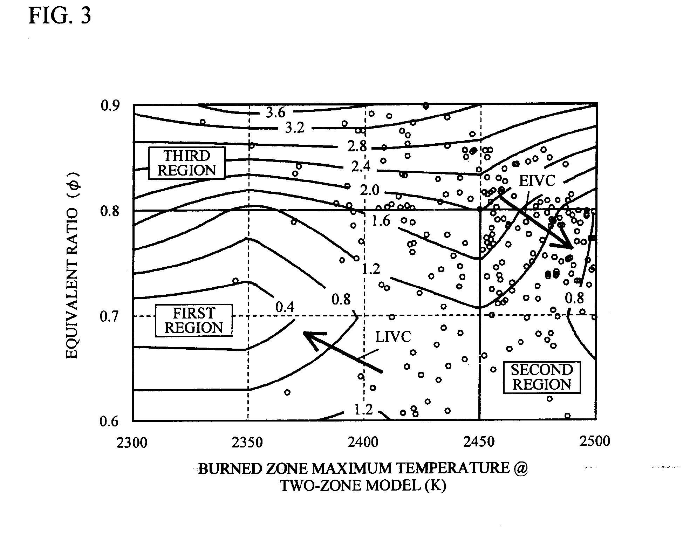

The inventors of the present invention have found out, by experiments, that the smoke-generating state of the compression ignition type internal combustion engine can be determined more accurately from a maximum value of gas temperature in a burned zone (hereinafter, referred to as a maximum combustion temperature) and an equivalent ratio in the compression ignition type internal combustion engine. FIG. 3 illustrates the experiment results.

FIG. 3 illustrates a relationship between a maximum combustion temperature and an equivalent ratio of the engine 100 and a smoke-generating state. In FIG. 3, the horizontal axis represents the maximum combustion temperature (K) of the engine 100. The maximum combustion temperature of the engine 100 is calculated with the two-zone model. Here, the two-zone model is a method that calculates a gas amount in a burned zone from a heat release rate (pressure indication) of an internal combustion engine, defines the other zone as an unburned zone, and calculates a gas temperature in the combustion chamber from a gas amount, a pressure before ignition, a combustion chamber volume, and an air excess ratio ($\lambda$) in each zone. Here, the method for calculating the maximum combustion temperature of the engine 100 is not limited to the two-zone model, and may be other methods. In FIG. 3, the vertical axis represents the equivalent ratio ($\varphi$). The equivalent ratio is a value calculated by dividing a theoretical air-fuel ratio of the engine 100 by an actual air-fuel ratio.

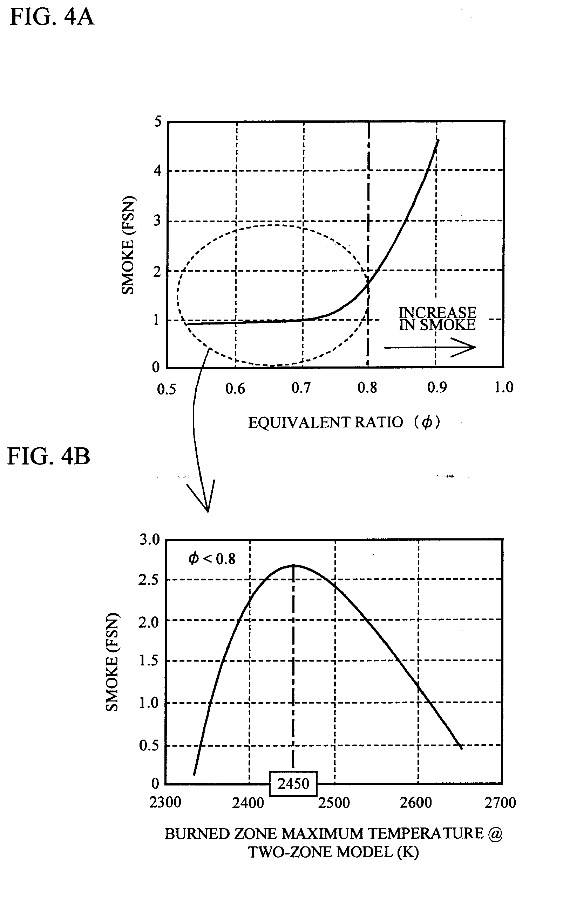

In FIG. 3, contour lines indicate a smoke generation amount of the engine 100 (Filter Smoke Number: FSN). The smoke generation amount of the engine 100 has a peak of the smoke generation amount at around 2450 K of maximum combustion temperature (second threshold value) in a region where the value of $\varphi$ is less than a given first threshold value (0.8 in FIG. 3) (see FIG. 4A and 4B). Further, the smoke generation amount decreases as the maximum combustion temperature decreases in a region where the maximum combustion temperature is less than the second threshold value. The above region ($\varphi < 0.8$, maximum combustion temperature < 2450 K) is defined as a first region. As described above, when the smoke-generating state of the engine 100 is in the first region, the smoke generation amount, i.e. the amount of smoke emission can be reduced by reducing the maximum combustion temperature.

Moreover, in FIG. 3, the smoke amount decreases as the maximum combustion temperature increases in a region where the maximum combustion temperature is greater than or equal to the second threshold value. This region ($\varphi < 0.8$, maximum combustion temperature $\geq$ 2450 K) is defined as a second region. As described above, when the smoke-generating state of the engine 100 is in the second region, the smoke generation amount, i.e. the amount of smoke emission can be reduced by increasing the maximum combustion temperature.

Furthermore, in FIG. 3, the smoke amount decreases as the equivalent ratio decreases in a region other than the first region and the second region, i.e. a region where $\varphi$ is greater than or equal to 0.8. This region ($\varphi \geq 0.8$) is defined as a third region. As described above, when the smoke-generating state of the engine 100 is in the third region, the smoke generation amount, i.e. the amount of smoke emission can be reduced by reducing the equivalent ratio.

As described above, the smoke-generating state of the engine 100 has a clear correlation to the maximum combustion temperature and the equivalent ratio. Thus, the recognition of the maximum combustion temperature and the equivalent ratio of the engine 100 enables to determine whether the smoke generation amount is in a region where it depends on the maximum combustion temperature (the first region or the second region) or in a region where it depends on the equivalent ratio (the third region).

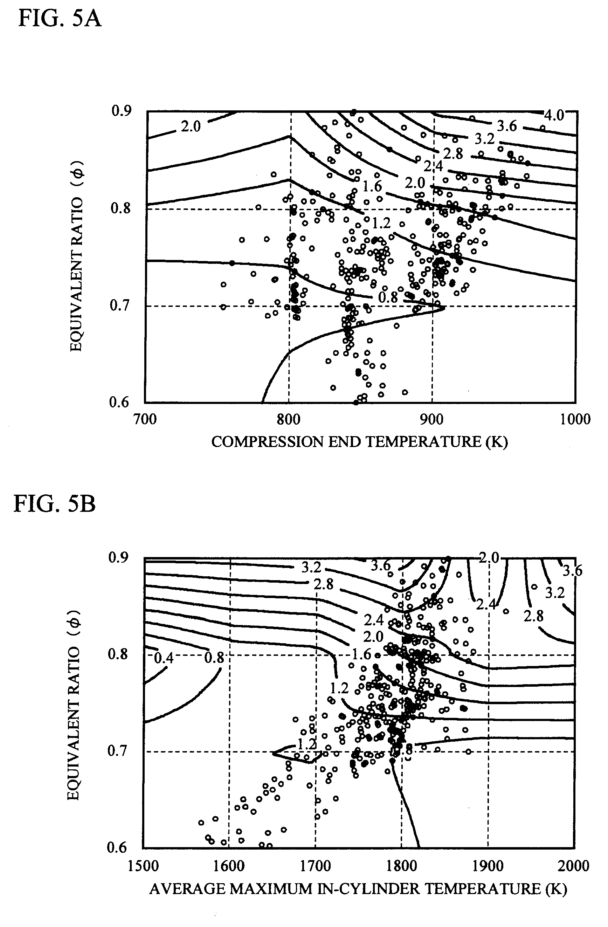

FIG. 5 illustrates experimental cases that use other temperatures in the combustion chamber of the engine 100. FIG. 5A illustrates a relationship between a compression end temperature and an equivalent ratio of the engine 100 and a smoke-generating state, and FIG. 5B illustrates a relationship between an average maximum in-cylinder temperature and an equivalent ratio of the engine 100 and a smoke-generating state. As illustrated in FIG. 5A, the smoke-generating state of the engine 100 fails to be distinctly divided into regions by the compression end temperature (in-cylinder temperature at a top dead center position of the piston) and the equivalent ratio. That is to say, it is difficult to determine whether the smoke generation amount of the engine 100 is in a region where it depends on the compression end temperature or in a region where it depends on the equivalent ratio from FIG. 5A. Similarly, as illustrated in FIG. 5B, the smoke-generating state of the engine 100 can not be distinctly divided into regions by the average maximum in-cylinder temperature and the equivalent ratio. That is to say, it is difficult to determine whether the smoke generation amount of the engine 100 is in a region where it depends on the average maximum in-cylinder temperature or in a region where it depends on the equivalent ratio from FIG. 5B. Accordingly, the smoke-generating state of the engine 100 fails to be determined accurately based on the temperature other than the maximum combustion temperature.

Therefore, the smoke-generating state of the compression ignition type internal combustion engine can be determined more accurately by acquiring the maximum value of gas temperature in the burned zone (maximum combustion temperature) and the equivalent ratio in the compression ignition type internal combustion engine. Threshold values (first threshold value and second threshold value) for the equivalent ratio and the maximum combustion temperature in FIG. 3 vary depending on the specification of the compression ignition type internal combustion engine such as the number of cylinders, a bore, a stroke, a compression ratio, and the like. Thus, the first threshold value and the second threshold value are not limited to the above described values, may be other proper threshold values in accordance with the engine specification.

The engine ECU 10 determines the smoke-generating state of the engine 100 based on the above described knowledge. The engine ECU 10 first calculates the average value of equivalent ratio for one cycle of the engine 100 based on the detection result by the air flow meter 44 and a command value of the fuel injection quantity to the injector 17. The equivalent ratio of the engine 100 to be calculated is not limited to the average value for one cycle, and may be the equivalent ratio for one cycle in a certain cylinder.

The engine ECU 10 calculates the maximum value of combustion temperature in the combustion chamber (maximum combustion temperature) for the same cycle as for the calculation of the average value of equivalent ratio. The maximum combustion temperature of the engine 100 is calculated with the following equation (1).

$$\text{Tmax} = \text{A1 (EGR ratio)} + \text{A2 (injection center)} + \text{A3 (compression end temperature)} + \text{A4 (engine rotational speed)} + \text{A5 (oxygen concentration)} + \text{A6 (compression end pressure)} + \text{C} \dots (1)$$

(Tmax: maximum combustion temperature, A1 ~ A6: coefficients based on engine specification, C: constant)

In the equation (1), the EGR ratio is a ratio of the amount of the exhaust gas recirculated to the intake side through the EGR passage 16 to the gas amount in the combustion chamber, and is calculated with, for example, the following equation (2) using a command value of the fuel injection quantity and detection results by the air flow meter 44, the intake pressure sensor 46, the intake temperature sensor 47, and the VN sensor 48 (see FIG. 6).

$$\text{EGR ratio} = \text{(Gcyl-Ga)/Ga} \dots (2)$$

(Gcyl: gas amount in combustion chamber, Ga: intake air quantity)

The EGR ratio greatly affects the maximum combustion temperature of the engine 100 (Tmax), and Tmax increases as the EGR ratio decreases (i.e. the coefficient A1 is negative).

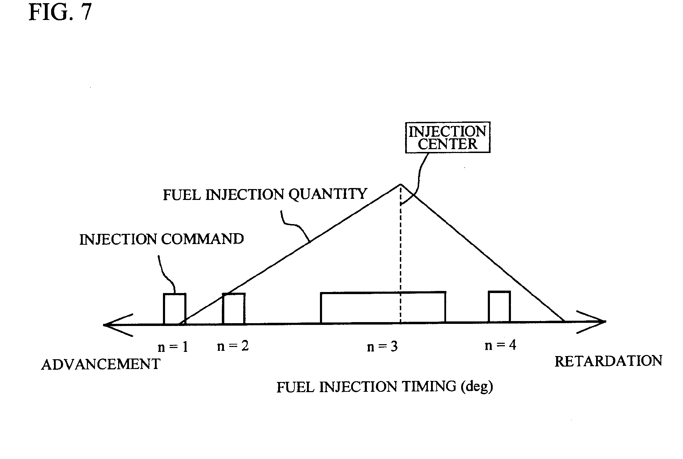

In addition, in the equation (1), the injection center is a center value of timing of the fuel injections by the injector 17. FIG. 7 illustrates a conceptual diagram of the injection center. For example, when the injector 17 executes a pilot injection twice, a main injection once, and an after injection once (injects fuel four times in total) for one cycle, calculated is the sum of the fuel injection quantity (total injection quantity) from the start (n = 1) to end (n = 4) of the fuel injection. Then, the injection timing (injection angle) when the half of the total injection quantity is injected is defined as the injection center. As described, the injection center is calculated with the following equation (3) using command values for the fuel injection quantity and the fuel injection timing to the injector 17 (see FIG. 8A).

$$\text{Injection center} = \Sigma(\text{injection quantity (n)} \times \text{injection timing (n)})/ \Sigma \text{ injection quantity (n)} \dots (3)$$

(n: the number of times of injection for one cycle)

The injection center affects the maximum combustion temperature of the engine 100 (Tmax), and Tmax decreases as the injection center decreases (shifts to the advancement side) (i.e. the coefficient A2 is negative).

In the equation (1), the compression end temperature is a gas temperature in the combustion chamber at the compression top dead center position of the piston, and is calculated with, for example, the following equation (4) using a calculated value of the temperature in the intake manifold 11 (see FIG. 6) and a detection result by the intake cam angle sensor 42 (see FIG. 8B).

$$\text{Compression end temperature} = \text{temperature in intake manifold } 11 \times \varepsilon^{\kappa-1} \ ...(4)$$

($\varepsilon$: actual compression ratio, $\kappa$: specific heat ratio)

The compression end temperature affects the maximum combustion temperature of the engine 100 (Tmax), and Tmax increases as the compression end temperature increases (i.e. the coefficient A3 is positive).

Furthermore, in the equation (1), the engine rotational speed is a crankshaft revolutions per minute (rpm) of the engine 100, and a detection result by the crank angle sensor 41 is used therefor. The engine rotational speed affects the maximum combustion temperature of the engine 100 (Tmax), and Tmax increases as the engine rotational speed decreases (i.e. the coefficient A4 is negative).

In the equation (1), the oxygen concentration is an oxygen concentration in the gas in the combustion chamber of the engine 100, and is calculated with, for example, the following equation (5) using a calculated value of the EGR ratio (see FIG. 6), a fuel injection command value, and a detection result by the air flow meter (see FIG. 8C).

$$\text{Oxygen concentration} = \text{oxygen ratio in the atmosphere} \times (1\text{-EGR ratio}/\lambda) \ ... \ (5)$$

($\lambda$: oxygen excess ratio)

The oxygen concentration affects the maximum combustion temperature of the engine 100 (Tmax), and Tmax increases as the oxygen concentration increases (i.e. the coefficient A5 is positive).

In the equation (1), the compression end pressure is an in-cylinder pressure at the compression top dead center position of the piston, and is calculated with, for example, the following equation (6) using detection results by the intake cam angle sensor 42 and the intake pressure sensor 46 (see FIG. 8D).

$$\text{Compression end pressure} = \text{pressure in intake manifold } 11 \times \varepsilon^{\kappa} \ ... \ (6)$$

($\varepsilon$: actual compression ratio, $\kappa$: specific heat ratio)

The compression end pressure affects the maximum combustion temperature of the engine 100 (Tmax), and Tmax increases as the compression end pressure increases (i.e. the coefficient A6 is positive).

All the parameters in the equation (1) are preferably used to calculate Tmax, but parameters that greatly contribute to the maximum combustion temperature may be selected to calculate Tmax. For example, the EGR ratio contributes the most to the maximum combustion temperature in the combustion chamber of the engine 100 among the parameters in the equation (1). Thus, the engine ECU 10 may calculate the maximum combustion temperature in the combustion chamber based on parameters including at least the EGR ratio. In addition, the injection center, the compression end temperature, the engine rotational speed, the oxygen concentration, and the compression end pressure follow the EGR ratio in this order in terms of the contribution to the maximum combustion temperature in the combustion chamber of the engine 100. Thus, parameters that have greater contribution to the maximum combustion temperature in the combustion chamber may be selected, and the maximum combustion temperature in the combustion chamber may be calculated with the selected parameters.

The engine ECU 10 then determines whether the calculated average value of equivalent ratio ($\varphi$) for one cycle of the engine 100 is less than the given first threshold value (0.8 in the present embodiment). Here, the first threshold value is previously described, and thus the detail description thereof is omitted . When the average value of equivalent ratio ($\varphi$) is not less than the first threshold value, the engine ECU 10 determines that the smoke-generating state of the engine 100 is in the third region (i.e. region other than the first region). The first region is a region where the smoke generation amount can be reduced by reducing the maximum combustion temperature in the combustion chamber as described previously. The third region is a region where the smoke generation amount can be reduced by decreasing the equivalent ratio as described previously.

On the other hand, when the average value of the equivalent ratio ($\varphi$) is less than the first threshold value, the engine ECU 10 determines whether the calculated maximum combustion temperature in the combustion chamber is less than the second threshold value. When the maximum combustion temperature in the combustion chamber is not less than the second threshold value, the engine ECU 10 determines that the smoke-generating state of the engine 100 is in the second region (i.e. region other than the first region). The second region is a region where the smoke generation amount can be reduced by increasing the maximum combustion temperature in the combustion chamber as described previously. When the maximum combustion temperature in the combustion chamber is less than the second threshold value, the engine ECU 10 determines that the smoke-generating state of the engine 100 is in the first region.

The above described control enables to determine whether the smoke-generating state is in a region where it is proportional to the maximum combustion temperature (first region), in a region where it is inversely proportional to the maximum combustion temperature (second region), or in a region where it depends on the equivalent ratio (third region) more accurately from the maximum combustion temperature and the equivalent ratio of the engine 100. That is to say, the smoke-generating state can be determined more accurately from the average value of equivalent ratio and the maximum value of combustion temperature for one cycle in the combustion chamber of the compression ignition type internal combustion engine.

In addition to the above described control, the engine ECU 10 changes the closing timing of the intake valve based on the determination result of the smoke-generating state to execute a control for reducing the smoke generation amount of the engine 100. Hereinafter, a description will be given of a control for changing the closing timing of the intake valve executed by the engine ECU 10.

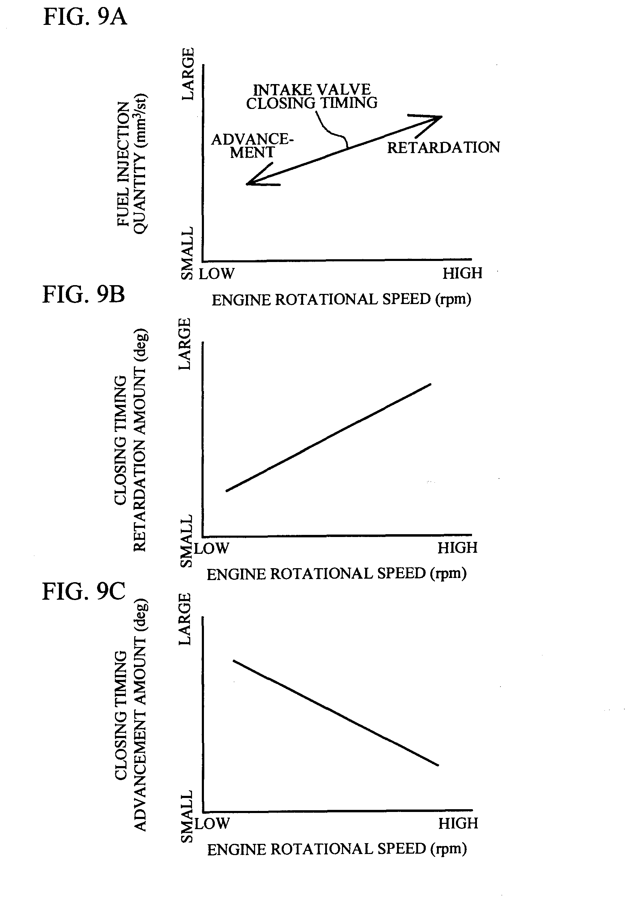

When the engine ECU 10 determines that the smoke-generating state of the engine 100 is in the region where it is proportional to the maximum combustion temperature (first region), it commands the electric VVT mechanism 26 to retard the closing timing of the intake valve 22 from the base timing (Late Invalve Close, abbreviated as LIVC hereinafter). FIG. 9 illustrates a closing timing control of the intake valve 22. FIG. 9A illustrates a base timing of the closing timing of the intake valve 22, and FIG. 9B illustrates a control for retarding the closing timing of the intake valve 22. During starting operation of the engine 100, the engine ECU 10 determines a proper closing timing of the intake valve 22 from the rotational speed of the engine 100 and the fuel injection quantity, and sends a command to the electric VVT mechanism 26 (see FIG. 9A). When the engine ECU 10 determines that the smoke-generating state of the engine 100 is in the first region, it calculates a retardation amount for the closing timing of the intake valve 22 from the base timing in accordance with the rotational speed of the engine 100. The engine ECU 10 sends the command LIVC to the electric VVT mechanism 26 to retard the closing timing of the intake valve 22 from the base timing based on the calculated retardation amount (see FIG. 9B).

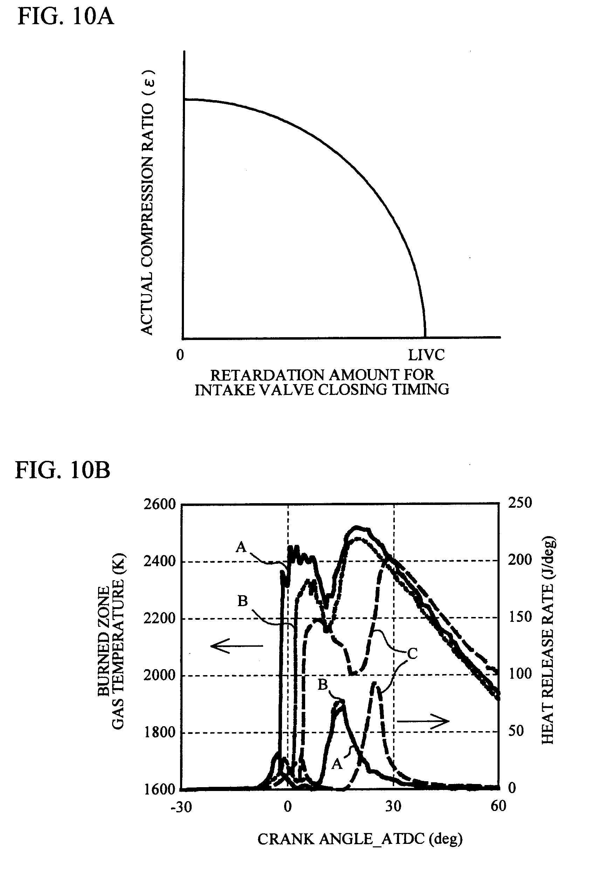

FIG. 10A illustrates a relationship between a retardation amount for the closing timing of the intake valve 22 and an actual compression ratio. The actual compression ratio of the engine 100 decreases as the retardation amount for the closing timing of the intake valve 22 increases because the amount of the gas blown back to the intake manifold 11 from the combustion chamber through the opened area of the intake valve 22 during the compression increases. FIG. 10B illustrates a relationship between a closing timing of the intake valve 22 and a burned zone gas temperature. In FIG. 10B, "A" indicates a case where the intake valve 22 is opened at the base timing, "B" indicates a case where the closing timing of the intake valve 22 is retarded from the base timing, and "C" indicates a case where the closing timing of the intake valve 22 is retarded from the base timing and the injection timing is retarded. The more the closing timing of the intake valve 22 is retarded, i.e. the more the actual compression ratio of the engine 100 decreases, the more the gas temperature in the burned zone of the engine 100 decreases.

Thus, when the smoke-generating state of the engine 100 is in the region where it is proportional to the maximum combustion temperature (first region), the smoke generation amount can be reduced by retarding the closing timing of the intake valve 22.

In this case, a valve open period of the intake valve 22 becomes shorter as the rotational speed of the engine 100 becomes higher, and the reduction effect of the actual compression ratio deteriorates as the valve open period of the intake valve 22 becomes shorter. Therefore, the engine ECU 10 increases the retardation amount for the closing timing of the intake valve 22 to make the valve open period of the intake valve 22 long as the rotational speed of the engine 100 increases, and thereby properly reduces the actual compression ratio of the engine 100. The above control allows the smoke generation amount of the engine 100 to be reduced properly (see FIG. 9B).

On the other hand, when the engine ECU 10 determines that the smoke-generating state of the engine 100 is in a region where it is inversely proportional to the maximum combustion temperature (second region), or in a region where it depends on the equivalent ratio (third region), it commands the electric VVT mechanism 26 to advance the closing timing of the intake valve 22 from the base timing (Early Invalve Close, abbreviated as EIVC hereinafter). FIG. 9A illustrates a base timing of the closing timing of the intake valve 22, and FIG. 9C illustrates a control for advancing the closing timing of the intake valve 22. During starting operation of the engine 100, the engine ECU 10 determines a proper closing timing of the intake valve 22 from the rotational speed of the engine 100 and the fuel injection quantity, and sends a command to the electric VVT mechanism 26 (see FIG. 9A). When the engine ECU 10 determines that the smoke-generating state of the engine 100 is in the second region or the third region, it calculates an advancement amount for the closing timing of the intake valve 22 from the base timing in accordance with the rotational speed of the engine 100. The engine ECU 10 sends the command EIVC to the electric VVT mechanism 26 to advance the closing timing of the intake valve 22 from the base timing based on the calculated advancement amount (see FIG. 9C).

When the closing timing of the intake valve 22 is advanced from the base timing, a scavenging rate of the gas in the combustion chamber improves, that is to say, the intake air quantity introduced into the combustion chamber increases because a volume efficiency of the engine 100 improves. Thus, the burned zone gas temperature of the engine 100 increases. In addition, when the volume efficiency of the engine 100 improves, the equivalent ratio ($\varphi$) of the engine 100 decreases because the ratio of the actual air-fuel ratio to the theoretical air-fuel ratio increases. As described above, the advancement of the closing timing of the intake valve 22 further increases the maximum combustion temperature of the engine 100, and further decreases the equivalent ratio.

Thus, when the smoke-generating state of the engine 100 is in the region where it is inversely proportional to the maximum combustion temperature (second region), or in a region where it depends on the equivalent ratio (third region), the smoke generation amount can be reduced by advancing the closing timing of the intake valve 22.

In this case, the valve open period of the intake valve 22 becomes longer as the rotational speed of the engine 100 becomes lower, and the amount of gas blown back into the intake manifold 11 from the combustion chamber through the opened area of the intake valve 22 during the compression increases as the valve open period of the intake valve 22 increases. Thus, the engine ECU 10 increases the advancement amount for the closing timing of the intake valve 22 to make the valve open period of the intake valve 22 short as the rotational speed of the engine 100 decreases, and thereby reduces the amount of gas blown back to the intake manifold 11. The above control increases the combustion temperature of the engine 100 properly and reduces the equivalent ratio of the engine 100 properly (see FIG. 9C).

The engine ECU 10 repeats the above described process until the operation of the engine 100 ends.

As described above, when the smoke-generating state of the engine 100 is in the region where it is proportional to the maximum combustion temperature (first region), the smoke generation amount can be properly reduced by executing the LIVC control that retards the closing timing of the intake valve 22 from the base timing. In addition, when the smoke-generating state of the engine 100 is in the region where it is inversely proportional to the maximum combustion temperature (second region), or in the region where it depends on the equivalent ratio (third region), the smoke generation amount can be properly reduced by executing the EIVC control that advances the closing timing of the intake valve 22 from the base timing.

The engine ECU 10 is an example of an equivalent ratio calculation means, a maximum combustion temperature calculation means, a determination means, and a variable valve timing means of the present invention.

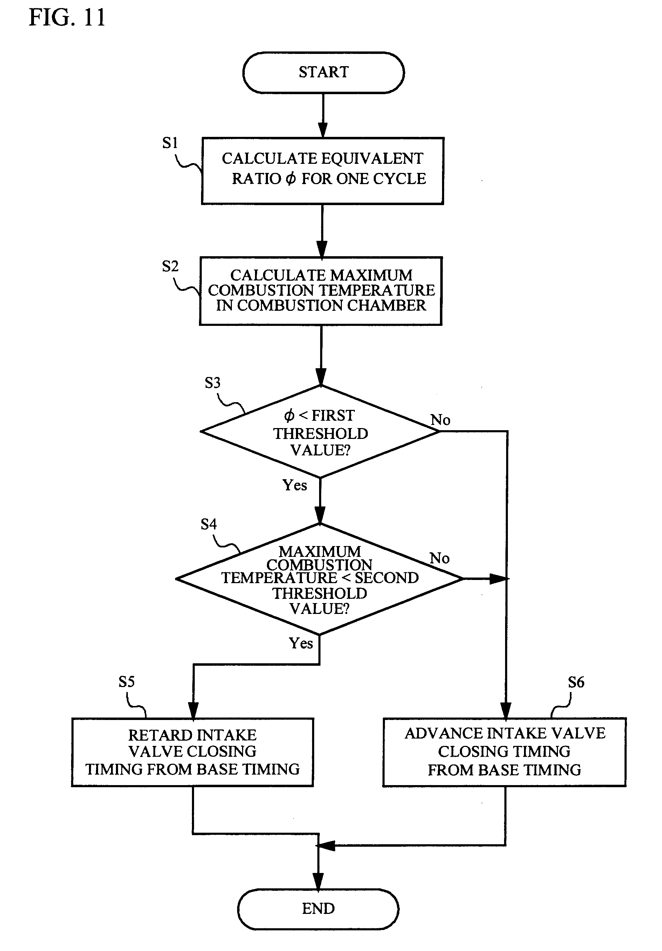

Next, a description will be given of an operation of the engine system 1 along the control process of the engine ECU 10. FIG. 11 is a flowchart illustrating the process by the engine ECU 10. The engine system 1 of the present embodiment calculates the average value of equivalent ratio and the maximum combustion temperature for one cycle in the combustion chamber, and determines the smoke-generating state of the engine 100 based on the calculation results. Further, the engine ECU 10 executes a control for reducing the smoke generation amount of the engine 100 by changing the closing timing of the intake valve 22 based on the determination result of the smoke-generating state.

The engine ECU 10 starts the control when the ignition switch is turned ON to start the engine 100, and repeats the following control process while the engine 100 is operating. In addition, the engine ECU 10 constantly receives detection results from the crank angle sensor 41, the air flow meter 44, the intake cam angle sensor 42, the intake pressure sensor 46, the intake temperature sensor 47, and the VN sensor 48 during the control process.

The engine ECU 10 first calculates the average value of equivalent ratio ($\varphi$) for one cycle of the engine 100 based on the received detection result from the air flow meter 44 and a command value of the fuel injection quantity to the injector 17 at step S1. After step S1, the engine ECU 10 goes to step S2.

At step S2, the engine ECU 10 calculates the maximum value of combustion temperature in the combustion chamber (maximum combustion temperature) for the same cycle as for the calculation of the average value of $\varphi$ at step S1 based on the equations (1) through (6). After step S2, the engine ECU 10 goes to step S3.

At step S3, the engine ECU 10 determines whether the average value of $\varphi$ calculated at step S1 is less than the given first threshold value. Here, the first threshold value is previously described, and thus the detail description thereof is omitted. When the average value of $\varphi$ is not less than the first threshold value (step S3/No), the engine ECU 10 determines that the smoke-generating state of the engine 100 is in the third region (i.e. region other than the first region), and goes to step S6. On the other hand, when the average value of $\varphi$ is less than the first threshold value (step S3/Yes), the engine ECU 10 determines that the smoke-generating state of the engine 100 is in one of the first region and the second region, and goes to step S4. Here, the first region, the second region, and the third region are previously described, and the detail description thereof is omitted.

At step S4, the engine ECU 10 determines whether the maximum combustion temperature in the combustion chamber calculated at step S2 is less than the given second threshold value. Here, the second threshold value is previously described, and thus the detail description thereof is omitted. When the maximum combustion temperature in the combustion chamber is not less than the second threshold value (step S4/No), the engine ECU 10 determines that the smoke-generating state of the engine 100 is in the second region (i.e. region other than the first region), and goes to step S6. On the other hand, when the maximum combustion temperature in the combustion chamber is less than the second threshold value (step S4/Yes), the engine ECU 10 determines that the smoke-generating state of the engine 100 is in the first region, and goes to step S5.

At step S5, the engine ECU 10 calculates the retardation amount for the closing timing of the intake valve 22 based on the detection result by the crank angle sensor 41. Then, the engine ECU 10 commands the electric VVT mechanism 26 to retard the closing timing of the intake valve 22 from the base timing (LIVC control) to reduce the actual compression ratio of the engine 100. The above control reduces the combustion temperature of the engine 100 to reduce the smoke generation amount. The engine ECU 10 ends the control process after step S5.

When the determination at step S3 or step S4 is No, the engine ECU 10 goes to step S6. At step S6, the engine ECU 10 calculates the advancement amount for the closing timing of the intake valve 22 based on the detection result by the crank angle sensor 41. The engine ECU 10 then commands the electric VVT mechanism 26 to advance the closing timing of the intake valve 22 from the base timing (EIVC control) to improve the volume efficiency of the engine 100. This control increases the combustion temperature of the engine 100 and reduces the equivalent ratio to reduce the smoke generation amount. The engine ECU 10 ends the control process after step S6.

The execution of the above described control enables to determine the smoke-generating state more accurately from the maximum value of gas temperatures in the burned zone (maximum combustion temperature) and the equivalent ratio in the engine 100. The control for reducing the smoke generation amount of the engine 100 can also be executed properly based on the determination result of the smoke-generating state. Thus, the smoke-generating state of the compression ignition type internal combustion engine can be determined accurately and the amount of smoke emission can be reduced. The engine ECU 10 may change the order of step S1 and step S2, or may execute them simultaneously.

As described above, the engine system of the present embodiment has the engine ECU including: the equivalent ratio calculation means that calculates the average value of equivalent ratio for one cycle in the combustion chamber of the engine, the maximum combustion temperature calculation means that calculates the maximum value of combustion temperature in the combustion chamber for the same cycle as for the calculation of the average value of equivalent ratio by the equivalent ratio calculation means, and the determination means that determines the smoke-generating state of the engine based on the calculation result by the equivalent ratio calculation means and the calculation result by the maximum combustion temperature calculation means. This configuration enables to determine the smoke-generating state more accurately from the maximum value of gas temperature in the burned zone (maximum combustion temperature) and the equivalent ratio in the engine.

In addition, the engine system of the present embodiment includes the electric VVT mechanism that changes the closing timing of the intake valve of the engine to a desired timing, determines that the smoke-generating state is in the first region when the calculated average value of equivalent ratio is less than the given first threshold value and the maximum value of combustion temperature in the combustion chamber is less than the given second threshold value, and commands the electric VVT mechanism to retard the closing timing of the intake valve. When the smoke-generating state is determined to be in a region other than the first region, the electric VVT mechanism is commanded to advance the closing timing of the intake valve. The above control enables to change the maximum combustion temperature and the equivalent ratio of the engine 100 in accordance with the smoke-generating state of the engine 100. Thus, the smoke generation amount of the compression ignition type internal combustion engine can be reduced properly.

Furthermore, the engine system of the present embodiment can adjust the retardation amount and the advancement amount for the closing timing of the intake valve in the control for reducing the smoke generation amount to a proper amount in accordance with the engine rotational speed. Therefore, the smoke generation amount of the compression ignition type internal combustion engine can be reduced more properly.

The above described embodiments are merely examples for carrying out the present invention, and the present invention is not limited to the above-mentioned embodiments, and it is apparent from the above descriptions that other embodiments, variations and modifications may be made without departing from the scope of the present invention.

[DESCRIPTION OF LETTERS OR NUMERALS]

1 ... engine system
10 ... engine ECU (equivalent ratio calculation means, maximum combustion temperature calculation means, determination means, variable valve timing means)
11 ... intake manifold
14 ... turbocharger (supercharger)
15 ... exhaust passage
16 ... EGR passage (exhaust gas recirculation passage)
17 ... injector
22 ... intake valve

26 ... electric VVT mechanism (variable valve timing means)

41 ... crank angle sensor

42 ... intake cam angle sensor

44 ... air flow meter

46 ... intake pressure sensor

47 ... intake temperature sensor

48 ... VN sensor

100 engine

**Claims**

1. A control device for a compression ignition type internal combustion engine **characterized by** comprising:

   an equivalent ratio calculation means configured to calculate an average value of equivalent ratio for one cycle in a combustion chamber of the compression ignition type internal combustion engine;
   a maximum combustion temperature calculation means configured to calculate a maximum value of combustion temperature in the combustion chamber for the same cycle as for calculation of the average value of equivalent ratio by the equivalent ratio calculation means;
   a determination means configured to determine a smoke-generating state of the compression ignition type internal combustion engine based on a calculation result by the equivalent ratio calculation means and a calculation result by the maximum combustion temperature calculation means; and
   a variable valve timing means configured to change a closing timing of an intake valve of the compression ignition type internal combustion engine to a desired timing, wherein
   the variable valve timing means changes the closing timing of the intake valve based on a determination result by the determination means.

2. The control device for the compression ignition type internal combustion engine according to claim 1, **characterized in that**
   the compression ignition type internal combustion engine includes an exhaust gas recirculation passage that connects an exhaust side to an intake side and recirculates a part of exhaust gas to the intake side, and
   the maximum combustion temperature calculation means extracts at least an exhaust gas recirculation ratio of the exhaust gas recirculation passage as a parameter and calculates the maximum value of combustion temperature in the combustion chamber for one cycle based on the parameter.

3. The control device for the compression ignition type internal combustion engine according to claim 1 or 2, **characterized in that**
   the maximum combustion temperature calculation means further extracts at least one of an injection center, which is calculated from a fuel injection quantity and an injection timing of the compression ignition type internal combustion engine, a compression end temperature in the combustion chamber, a rotational speed of the compression ignition type internal combustion engine, an oxygen concentration in the combustion chamber, and a compression end pressure in the combustion chamber as a parameter, and calculates the maximum value of combustion temperature for one cycle in the combustion chamber based on the parameter.

4. The control device for the compression ignition type internal combustion engine according to any one of claims 1 through 3, **characterized in that**
   the determination means determines that the smoke-generating state of the compression ignition type internal combustion engine is in a first region when the calculation result by the equivalent ratio calculation means is less than a first threshold value and the calculation result by the maximum combustion temperature calculation means is less than a second threshold value, and
   the variable valve timing means shifts the closing timing of the intake valve toward a retardation side when the determination means determines that the smoke-generating state of the compression ignition type internal combustion engine is in the first region.

5. The control device according to any one of claims 1 through 4, **characterized in that**
   the determination means determines that the smoke-generating state of the compression ignition type internal combustion engine is in a region other than a first region when the calculation result by the equivalent ratio calculation means is greater than or equal to a first threshold value and the calculation result by the maximum combustion temperature calculation means is greater than or equal to a second threshold value, and
the variable valve timing means shifts the closing timing of the intake valve toward an advancement side when the determination means determines that the smoke-generating state of the compression ignition type internal combustion engine is in the region other than the first region.

6. The control device for the compression ignition type internal combustion engine according to claim 4, **characterized in that**
the variable valve timing means further shifts the closing timing of the intake valve toward the retardation side as a rotational speed of the compression ignition type internal combustion engine increases.

7. The control device for the compression ignition type internal combustion engine according to claim 5, **characterized in that**
the variable valve timing means further shifts the closing timing of the intake valve toward the advancement side as a rotational speed of the compression ignition type internal combustion engine decreases.

8. A method for determining a smoke-generating state of a compression ignition type internal combustion engine, the method comprising:

an equivalent ratio calculation step for calculating an average value of equivalent ratio for one cycle in a combustion chamber of the compression ignition type internal combustion engine;
a maximum combustion temperature calculation step for calculating a maximum value of combustion temperature in the combustion chamber for the same cycle as for calculation of the average value of equivalent ratio at the equivalent ratio calculation step; and
a determination step for determining a smoke-generating state of the compression ignition type internal combustion engine based on a calculation result at the equivalent ratio calculation step and a calculation step at the maximum combustion temperature calculation step.

FIG. 1

FIG. 2

FIG. 3

FIG. 4A

FIG. 4B

BURNED ZONE MAXIMUM TEMPERATURE @
TWO-ZONE MODEL (K)

FIG. 5A

FIG. 5B

FIG. 6

EGR RATIO

FRESH GAS AMOUNT

IN-CYLINDER GAS AMOUNT

AIR FLOW METER

INTAKE MANIFOLD PRESSURE

INTAKE MANIFOLD TEMPERATURE

INTAKE PRESSURE SENSOR

FRESH GAS AMOUNT

FRESH GAS TEMPERATURE

EGR GAS AMOUNT

EXHAUST MANIFOLD TEMPERATURE

AIR FLOW METER

INTAKE TEMPERATURE SENSOR

IN-CYLINDER GAS TEMPERATURE

FRESH GAS AMOUNT

FRESH GAS AMOUNT

INTAKE MANIFOLD PRESSURE

FUEL INJECTION QUANTITY

EXHAUST MANIFOLD PRESSURE

AIR FLOW METER

AIR FLOW METER

INTAKE PRESSURE SENSOR

INJECTION COMMAND VALUE

FRESH GAS AMOUNT

INTAKE MANIFOLD PRESSURE

FUEL INJECTION QUANTITY

VN OPENING DEGREE

AIR FLOW METER

INTAKE PRESSURE SENSOR

INJECTION COMMAND VALUE

VN SENSOR

FIG. 7

FIG. 8A

```
┌─────────────┐      ┌─────────────┐
│  INJECTION  │      │  INJECTION  │
│  COMMAND    │──────│  TIMING (n) │──┐
│   VALUE     │      └─────────────┘  │   ┌─────────────┐
└─────────────┘                       │   │  INJECTION  │
              (n-TIME INJECTION)      ├───│   CENTER    │
┌─────────────┐      ┌─────────────┐  │   │   TIMING    │
│  INJECTION  │      │FUEL INJECTION│ │   └─────────────┘
│  COMMAND    │──────│ QUANTITY (n) │─┘
│   VALUE     │      └─────────────┘
└─────────────┘
```

FIG. 8B

```
┌─────────────┐      ┌─────────────┐
│  CAM ANGLE  │──────│INTAKE VALVE │──┐
│   SENSOR    │      │CLOSING TIMING│  │
└─────────────┘      └─────────────┘  │   ┌─────────────┐
                                      │   │ COMPRESSION │
                     ┌─────────────┐  ├───│    END      │
                     │   INTAKE    │  │   │ TEMPERATURE │
                     │  MANIFOLD   │──┘   └─────────────┘
                     │ TEMPERATURE │
                     └─────────────┘
```

FIG. 8C

```
                     ┌─────────────┐
                     │  EGR RATIO  │──┐
                     └─────────────┘  │
┌─────────────┐      ┌─────────────┐  │   ┌─────────────┐
│  AIR FLOW   │──────│  INJECTION  │  │   │   OXYGEN    │
│   METER     │      │  TIMING (n) │──┼───│  CONCEN-    │
└─────────────┘      └─────────────┘  │   │  TRATION    │
┌─────────────┐      ┌─────────────┐  │   └─────────────┘
│  CAM ANGLE  │──────│FUEL INJECTION│─┘
│   SENSOR    │      │  QUANTITY   │
└─────────────┘      └─────────────┘
```

FIG. 8D

```
┌─────────────┐      ┌─────────────┐
│  CAM ANGLE  │──────│INTAKE VALVE │──┐
│   SENSOR    │      │CLOSING TIMING│  │
└─────────────┘      └─────────────┘  │   ┌─────────────┐
                                      │   │ COMPRESSION │
┌─────────────┐      ┌─────────────┐  ├───│    END      │
│   INTAKE    │      │   INTAKE    │  │   │  PRESSURE   │
│  PRESSURE   │──────│  MANIFOLD   │──┘   └─────────────┘
│   SENSOR    │      │  PRESSURE   │
└─────────────┘      └─────────────┘
```

FIG. 9A

FUEL INJECTION QUANTITY (mm³/st)

LARGE

INTAKE VALVE
CLOSING TIMING

ADVANCE-
MENT                    RETARDATION

SMALL

LOW                              HIGH

ENGINE ROTATIONAL SPEED (rpm)

FIG. 9B

CLOSING TIMING
RETARDATION AMOUNT (deg)

LARGE

SMALL

LOW                              HIGH

ENGINE ROTATIONAL SPEED (rpm)

FIG. 9C

CLOSING TIMING
ADVANCEMENT AMOUNT (deg)

LARGE

SMALL

LOW                              HIGH

ENGINE ROTATIONAL SPEED (rpm)

24

## FIG. 10A

ACTUAL COMPRESSION RATIO ($\varepsilon$)

0

LIVC

RETARDATION AMOUNT FOR
INTAKE VALVE CLOSING TIMING

## FIG. 10B

BURNED ZONE
GAS TEMPERATURE (K)

HEAT RELEASE RATE (J/deg)

CRANK ANGLE_ATDC (deg)

FIG. 11

```
                    ┌─────────────┐
                    │    START    │
                    └──────┬──────┘
                           │
                           ▼
S1          ┌──────────────────────────────┐
            │  CALCULATE EQUIVALENT         │
            │  RATIO φ FOR ONE CYCLE        │
            └──────────────┬───────────────┘
                           │
                           ▼
S2          ┌──────────────────────────────┐
            │  CALCULATE MAXIMUM            │
            │  COMBUSTION TEMPERATURE       │
            │  IN COMBUSTION CHAMBER        │
            └──────────────┬───────────────┘
                           │
                           ▼
S3              ◇ φ < FIRST              No
                  THRESHOLD  ─────────────────┐
                  VALUE?                       │
                    │ Yes                      │
                    ▼                          │
S4              ◇ MAXIMUM                      │
                  COMBUSTION        No         │
                  TEMPERATURE < SECOND ────────┤
                  THRESHOLD                    │
                  VALUE?                        │
                    │ Yes                      │
                    ▼                          ▼
S5  ┌──────────────────────────┐   S6  ┌──────────────────────────┐
    │  RETARD INTAKE           │       │  ADVANCE INTAKE VALVE    │
    │  VALVE CLOSING           │       │  CLOSING TIMING          │
    │  TIMING FROM BASE TIMING │       │  FROM BASE TIMING        │
    └────────────┬─────────────┘       └────────────┬─────────────┘
                 └──────────────┬───────────────────┘
                                ▼
                         ┌─────────────┐
                         │     END     │
                         └─────────────┘
```

26

FIG. 12

## INTERNATIONAL SEARCH REPORT

International application No.

PCT/JP2011/051020

A. CLASSIFICATION OF SUBJECT MATTER
*F02D13/02*(2006.01)i, *F02D41/02*(2006.01)i, *F02D43/00*(2006.01)i

According to International Patent Classification (IPC) or to both national classification and IPC

B. FIELDS SEARCHED

Minimum documentation searched (classification system followed by classification symbols)
F02D13/02, F02D41/02, F02D43/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-303437 A (Toyota Motor Corp.),<br>22 November 2007 (22.11.2007),<br>abstract; claims 1 to 7; paragraphs [0008] to<br>[0011], [0071] to [0072]; fig. 6, 13<br>(Family: none) | 1-2,8<br>3-7 |
| Y<br>A | JP 2009-008023 A (Toyota Motor Corp.),<br>15 January 2009 (15.01.2009),<br>claims 5 to 6; paragraphs [0081] to [0090];<br>fig. 10<br>(Family: none) | 1-2,8<br>3-7 |
| A | JP 2009-216059 A (Toyota Motor Corp.),<br>24 September 2009 (24.09.2009),<br>claims 1, 6; paragraphs [0013] to [0016];<br>fig. 3<br>(Family: none) | 1-8 |

| ☒ Further documents are listed in the continuation of Box C. | ☐ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>29 March, 2011 (29.03.11) | Date of mailing of the international search report<br>05 April, 2011 (05.04.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/051020

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-299623 A  (Toyota Motor Corp.),<br>24 December 2009 (24.12.2009),<br>abstract; paragraphs [0050] to [0051]<br>(Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009174377 A
- JP 8296469 A